# EUROPEAN PATENT SPECIFICATION

(11) **EP 3 153 745 B1**
(45) Date of publication and mention of the grant of the patent: **17.08.2022**
(21) Application number: 16192206.7
(22) Date of filing: 04.10.2016
(51) Int. Cl.: F16H 59/08, F16H 61/12

(54) **SHIFT APPARATUS AND SHIFT APPARATUS ABNORMALITY DETECTION METHOD**
SCHALTVORRICHTUNG UND SCHALTVORRICHTUNGSFEHLERERKENNUNGSVERFAHREN
APPAREIL DE COMMANDE DE VITESSES ET PROCÉDÉ DE DÉTECTION D'ANORMALITÉ D'APPAREIL DE COMMANDE DE VITESSES

(30) Priority: 07.10.2015 JP 2015199808
(43) Date of publication of application: 12.04.2017
(73) Proprietor: Alps Alpine Co., Ltd., Tokyo 145-8501 (JP)
(72) Inventor: MIYAKO, Ikuyasu, Tokyo, Tokyo 145-8501 (JP); KIMURA, Wataru, Tokyo, Tokyo 145-8501 (JP)
(74) Representative: Schmitt-Nilson Schraud Waibel Wohlfrom Patentanwälte Partnerschaft mbB

(56) References cited:
- WO-A1-01/11271
- WO-A1-2012/064899
- DE-A1-102004 054 264
- JP-A- 2008 106 826
- JP-A- 2012 235 613
- US-A1- 2006 037 424
- US-A1- 2009 000 413

## Description

### BACKGROUND OF THE INVENTION

### 1. Field of the Invention

The present invention relates to a shift apparatus and a method of detecting an abnormality in the shift apparatus.

### 2. Description of the Related Art

Some shift apparatuses in vehicles rotate a manipulation knob to switch a transmission. With some of these shift apparatuses, the manipulation knob is stored so as to be flush with a manipulation panel and protrudes from the manipulation panel when an ignition switch is turned on. The manipulation knob is moved by converting the rotation of a motor to a translational motion. A photosensor is used to detect the position of the manipulation knob. PCT Japanese Translation Patent Publication No. 2009-519855 is an example of related art.

WO 2012/064899 A1 shows an electronic selector switch assembly for a vehicle including a housing and a selector knob supported by a shaft. A knob position gear is connected to the selector knob and knob measurement gear is connected to the knob position gear. A first sensor senses an angular position of the selector knob. A rack is rotatable about the shaft and selector knob and a rack measurement gear is connected to the rack. A second sensor senses a position of the rack measurement gear. A drive assembly is connected to the rack, and if the knob position, rack position and transmission gear position do not compare, the drive assembly realigns the rack to match the transmission gear position.

US 2009/000413 A1 shows a selection device for shifting a vehicle transmission, with an operating element, which can be rotated into different shift positions about an axis of rotation and with a shaft, which is connected to the operating element and is rotatable about the axis of rotation. An angle of rotation sensing device is connected to the shaft, by which a rotation of the operating element about the axis of rotation can be sensed. An actuator is provided by which a torque can be applied to the shaft or a torque can be applied to oppose a rotation of the shaft. A control is connected to the angle of rotation sensing device and to the actuator for controlling the torque.

US 2006/037424 A1 shows a rotatable selector mechanism for a motor vehicle transmission having a selector knob rotatable in a housing to select an operating mode of the transmission among a number of selector positions indicated by a label. The selector mechanism further includes a detent plate which cooperates with a detent pin for maintaining the selector knob in each of positions. The detent plate is connected to position sensors for generating selector signals to a transmission control unit which supplies control signals to an actuator for operating the transmission according to the operating mode selected.

WO 01/11271 A1 shows a transmission range selector system having a driver interface module, an electronic control module, and an actuator coupleable to an automotive transmission. A desired gear position set at the driver interface module is redundantly sensed by the combination of a rotational position Hall effect sensor and a plurality of discrete position Hall effect sensors. The Hall effect sensors provide an output to the electronic control module for energizing the actuator to change the transmission gear position to the desired transmission gear set at the driver interface module.

DE 10 2004 054 264 A1 shows an actuation device comprising a rotation knob for a shift-by-wire transmission, wherein the rotation knob is configured to be retractable.

### SUMMARY OF THE INVENTION

If the manipulation knob has not been moved to the correct position, the transmission cannot be normally switched. In view of this, two photosensors may be used to detect the position of the manipulation knob redundantly so that even if one of the two photosensors causes an abnormality, the position of the manipulation knob can still be detected. However, when two photosensors of the same type are used, if they cause the same abnormality due to the same event, the abnormality may not be accurately detected. There is also a disadvantage in that since various sensors are included in the shift apparatus, if all sensors are duplicated, the structure becomes complex.

To address the above situation, the present invention provides a shift apparatus that can accurately detect an abnormality with a simple structure and a method of detecting an abnormality in the shift apparatus.

A shift apparatus in a first aspect of the present invention is a shift apparatus according to claim 1.

According to this structure, it is possible to provide a shift apparatus that can accurately detect an abnormality with a simple structure. Since sensors intended for direct detection of different targets are used to detect the position of the manipulation knob, the possibility that the same abnormality occurs due to the same event is lower than when two sensors of the same type are used to detect the same target, enabling an abnormality to be more accurately detected. The structure can be simplified when compared with a case in which a plurality of position sensors are used to redundantly detect their target and a plurality of rotation sensors are also used to redundantly detect their target.

Other embodiments of the invention are defined in the dependent claims.

Preferably, the shift apparatus in the first aspect of the present invention may have two position sensors. The manipulation knob may move between a reference position within a detection range detected by one of the two position sensors and a reference position within a detection range detected by the other position sensor.

Preferably, in the first decision, the abnormality detecting unit may decide whether the manipulation knob has reached the boundary of the detection range, the boundary being the reference position, from the inside of the detection range, according to the rotation amount detected by the rotation sensors. In the second decision, the abnormality detecting unit may decide whether the manipulation knob has reached the boundary of the detection range from the inside of the detection range, according to the position detected by the position sensor.

Preferably, the predetermined path along which the moving mechanism moves the manipulation knob when the rotational shaft rotates may be a straight line.

A second aspect of the present invention relates to a method according to claim 11.

In this structure, it is possible to provide a shift apparatus that can accurately detect an abnormality with a simple structure and a method of detecting an abnormality in the shift apparatus.

The present invention can provide a shift apparatus that can accurately detect an abnormality with a simple structure and a method of detecting an abnormality in the shift apparatus.

### BRIEF DESCRIPTION OF THE DRAWINGS

Fig. 1 is a perspective view of a shift apparatus in an embodiment of the present invention;
Fig. 2 is another perspective view of the shift apparatus in Fig. 1;
Fig. 3 is a cross-sectional view of the shift apparatus in Fig. 1 as taken along line III-III in FIG. 1;
Fig. 4 is a cross-sectional view of the shift apparatus in Fig. 2 as taken along line IV-IV in FIG. 2;
Fig. 5 is a conceptual diagram illustrating the layout of part of the elements constituting a motor;
Fig. 6 is a block diagram illustrating the structure of a control system of the shift apparatus in Fig. 1;
Fig. 7 illustrates a positional relationship between a position sensor and a light shielding piece;
Fig. 8 illustrates another positional relationship between the position sensor and the shielding piece;
Fig. 9 illustrates still another positional relationship between the position sensor and the shielding piece;
Fig. 10 is a flowchart illustrating a method of detecting an abnormality in the shift apparatus in Fig. 1; and
Fig. 11 illustrates a positional relationship among two position sensors and two shielding pieces.

### DESCRIPTION OF THE PREFERRED EMBODIMENT

### Structure

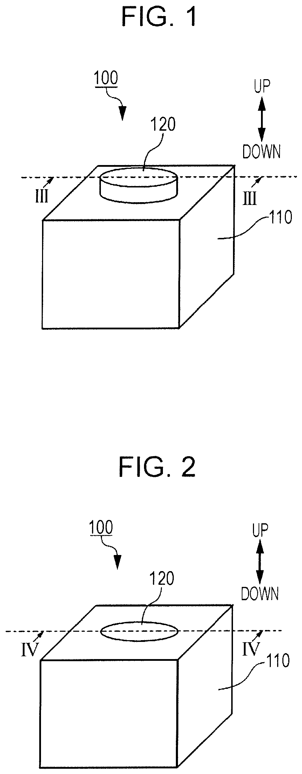

A shift apparatus in an embodiment of the present invention will be described. Figs. 1 and 2 are perspective views illustrating different states of the shift apparatus 100 in this embodiment. The shift apparatus 100 is mounted in a vehicle (not illustrated).

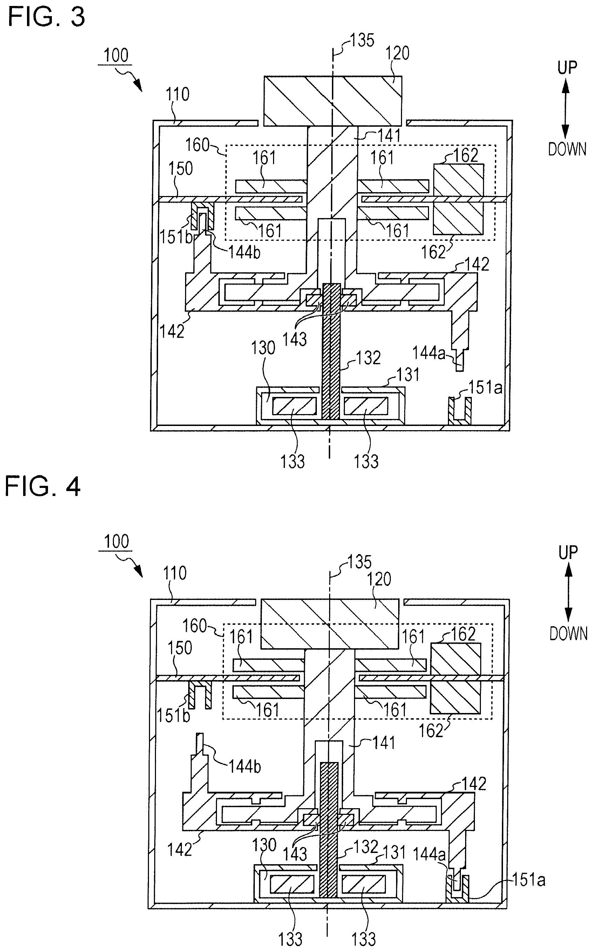

Fig. 3 is a schematic cross-sectional view of the shift apparatus 100 in Fig. 1 in a state in which a manipulation knob 120 is at a protruding position, as taken in a plane that includes line III-III and the up-down direction, which is a direction in which the manipulation knob 120 moves, and as viewed in the direction indicated by the arrows. Fig. 4 is a schematic cross-sectional view of the shift apparatus 100 in Fig. 2 in a state in which the manipulation knob 120 is at a stored position, as taken in a plane that includes line IV-IV and the up-down direction, in which the manipulation knob 120 moves, and as viewed in the direction indicated by the arrows.

The shift apparatus 100 has a case 110 and the manipulation knob 120 as illustrated in Fig. 1. The elements constituting the shift apparatus 100 are stored in the case 110, except the manipulation knob 120. The case 110 may be omitted.

The manipulation knob 120 receives a rotational manipulation performed by the user and switches a transmission accordingly. The manipulation knob 120 moves between the protruding position, illustrated in Fig. 1, at which the manipulation knob 120 protrudes upwardly from the case 110 and the storage position, illustrated in Fig. 2, at which the manipulation knob 120 is stored in the case 110. When, for example, the ignition switch (not illustrated) of the vehicle is turned on, the manipulation knob 120 moves from the storage position in Fig. 2 to the protruding position in Fig. 1; when the ignition switch is turned off, the manipulation knob 120 moves from the protruding position in Fig. 1 to the storage position in Fig. 2.

The shift apparatus 100 has a motor 130 as illustrated in Fig. 3. Although the motor 130 in this embodiment is a three-phase brushless motor with four poles and six slots, another brushless motor may be used. Alternatively, another type of motor such as a stepping motor may be used. The motor 130 includes a cover 131, a rotational shaft 132 protruding upwardly from the inside of the cover 131 to the outside of the cover 131, and a stator 133 provided in the cover 131 so as to be placed around the rotational shaft 132. A groove is formed in the cylindrical outer curved surface of the rotational shaft 132 so that it functions as a worm gear.

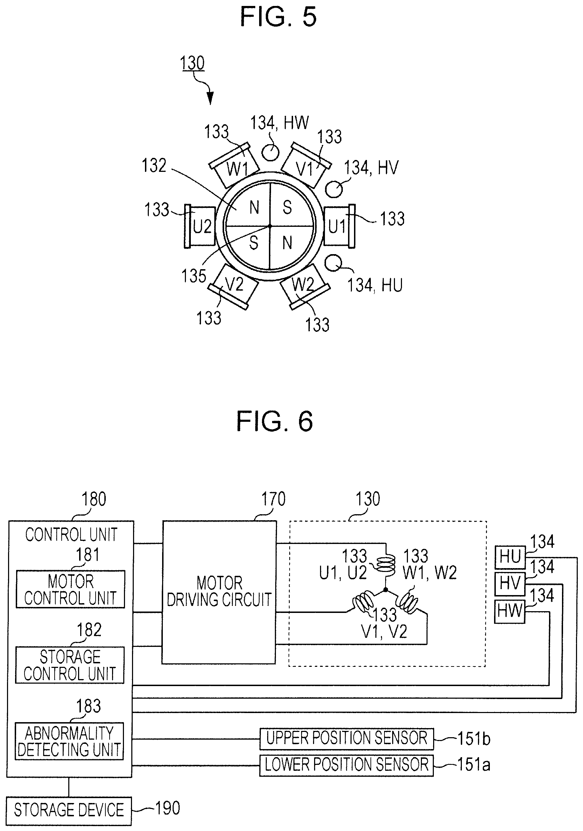

Fig. 5 is a conceptual diagram illustrating the layout of part of the elements constituting the motor 130 when viewed from above. The rotational shaft 132 rotates around a virtual central line 135 extending in the up-down direction. Magnets are provided at the bottom of the rotational shaft 132 so that four poles (NSNS) are evenly placed in the rotational direction; the magnets function as a rotor. Six coils (U1, V1, W1, U2, V2, and W2) constituting the stator 133 with six slots are placed around the rotor. The coils U1, V1, W1, U2, V2, and W2 are equally spaced in that order at intervals of 60 degrees around the virtual central line 135 in the counterclockwise direction.

The motor 130 further includes three rotation sensors 134 that are equally spaced at intervals of 60 degrees around the virtual central line 135. Each rotation sensor 134 is a magnetic sensor; specifically, the rotation sensor 134 is a Hall element that uses the Hall effect. The rotation sensors 134 detect the amount of the rotation of the rotational shaft 132. The rotation sensor 134 (HU) is placed between the coil W2 and the coil U1. The rotation sensor 134 (HV) is placed between the coil U1 and the coil VI. The rotation sensor 134 (HW) is placed between the coil V1 and the coil W1.

The rotation direction of the rotational shaft 132 and the amount of its rotation are found from a pattern of signals output from the three rotation sensors 134. The amount of rotation corresponds to an angle through which the rotational shaft 132 has rotated.

The shift apparatus 100 further has a lifting shaft 141, a lifting platform 142, and a driven gear piece 143 as illustrated in Fig. 3. The lifting shaft 141 is integrally linked with the manipulation knob 120. The lifting shaft 141 rotates around the virtual central line 135 together with the manipulation knob 120. The lifting platform 142 rotatably holds the lifting shaft 141. The lifting platform 142 is movable in the up-down direction, but its rotation around the virtual central line 135 is restricted by an element (not illustrated). The driven gear piece 143 is secured to the lifting platform 142 and is placed around the rotational shaft 132. The driven gear piece 143 has a gear groove, which engages the worm gear of the rotational shaft 132, on a surface facing the rotational shaft 132.

As the rotational shaft 132 rotates, the driven gear piece 143 moves in the up-down direction without rotating. Due to the rotation of the rotational shaft 132, the driven gear piece 143, lifting platform 142, lifting shaft 141, and manipulation knob 120 move together in the up-down direction. Neither the driven gear piece 143 nor lifting platform 142 rotates around the virtual central line 135, but the manipulation knob 120 and lifting shaft 141 are bidirectionally rotatable around the virtual central line 135. The manipulation knob 120 and lifting shaft 141 can be rotated independently of the rotation of the rotational shaft 132. The worm gear of the rotational shaft 132 and the driven gear piece 143 function as a moving mechanism that moves the manipulation knob 120 along a predetermined path when the rotational shaft 132 rotates. The predetermined path is a straight line parallel to the virtual central line 135.

The lifting platform 142 has two light shielding pieces, a lower light shielding piece 144a and an upper light shielding piece 144b (they may be referred to below as the light shielding piece 144 without being distinguished). The lower light shielding piece 144a protrudes downwardly from part of the lifting platform 142, and the upper light shielding piece 144b protrudes upwardly from part of the lifting platform 142. The amount of the rotation of the light shielding piece 144 in the up-down direction is equal to the amount of the rotation of the manipulation knob 120.

The shift apparatus 100 further has a circuit board 150. The circuit board 150 is placed so as to define the internal space of the case 110 in the up-down direction. The circuit board 150 is disposed between the manipulation knob 120 and the lifting platform 142 so that the lifting shaft 141 passes through the circuit board 150 without contact with it.

The shift apparatus 100 further has a lower position sensor 151a and an upper position sensor 151b (they may be referred to below as the position sensor 151 without being distinguished). The position sensor 151 is a photosensor that indirectly detects the position of the manipulation knob 120 by detecting the position of the light shielding piece 144. The lower position sensor 151a, which is placed on the bottom surface inside the case 110, detects the position of the lower light shielding piece 144a. The lower position sensor 151b, which is placed on the lower surface inside the circuit board 150, detects the position of the upper light shielding piece 144b.

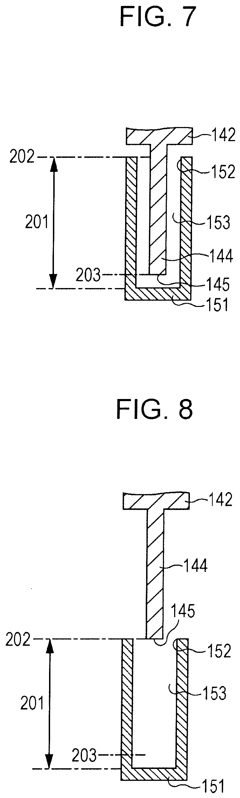

Figs. 7 to 9 illustrate different positional relationships between the position sensor 151 and the light shielding piece 144. As illustrated in Fig. 7, the position sensor 151 defines an internal space 153 in such a way that an opening 152 is formed at the top or bottom. The position sensor 151 uses light to detect whether a substance is present in the internal space 153. If the light shielding piece 144 is present in the internal space 153, the position sensor 151 is turned on. If the light shielding piece 144 is not present in the internal space 153, the position sensor 151 is turned off.

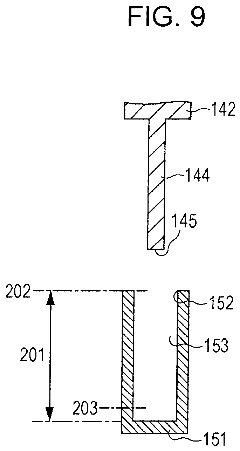

In the up-down direction, the amount of the movement of the light shielding piece 144 is equal to the amount of the movement of the manipulation knob 120. In the description below, therefore, the position of the end 145 of the light shielding piece 144 and the position of the manipulation knob 120 will be associated with each other. When, for example, the end 145 of the light shielding piece 144 is positioned in the internal space 153 as illustrated in Fig. 7, the manipulation knob 120 is within a detection range 201. When the light shielding piece 144 is positioned outside the detection range 201 and only the end 145 of the light shielding piece 144 is positioned in the opening 152, which is a boundary on which the position sensor 151 is switched between its turned-on state and turned-off state as illustrated in Fig. 8, the manipulation knob 120 is at a detection position 202. When the whole of the light shielding piece 144, including the end 145, is positioned outside the internal space 153 as illustrated in Fig. 9, the manipulation knob 120 is outside the detection range 201.

The position sensor 151 indirectly detects the position of the manipulation knob 120 through the light shielding piece 144. Specifically, the position sensor 151 detects that the manipulation knob 120 is present at the detection position 202, the manipulation knob 120 is present within the detection range 201, the boundary of which is the detection position 202, and the manipulation knob 120 is not present within the detection range 201, the boundary of which is the detection position 202.

The relationship between the lower position sensor 151a and the lower light shielding piece 144a is upside down in relation to the relationship between the upper position sensor 151b and the upper light shielding piece 144b. The manipulation knob 120 moves between a stop position 203a in a detection range 201a detected by the lower position sensor 151a and a stop position 203b in a detection range 201b detected by the upper position sensor 151b.

The shift apparatus 100 further has a manipulation detecting unit 160 mounted on the circuit board 150. The manipulation detecting unit 160 includes two rotational disks 161, one being disposed on each side of the circuit board 150, and a manipulation amount sensor 162 for the rotational disk 161. The lifting shaft 141 is placed so as to pass through the rotational disks 161. A groove is formed in the cylindrical side surface of the lifting shaft 141 so as to extend in the up-down direction. The engaging pieces of rotational disks 161 engage the groove in the lifting shaft 141. Each rotational disk 161 is constrained to the circuit board 150 by a constituent element (not illustrated) so as not to move in the up-down direction while remaining rotatable around the virtual central line 135.

When the lifting shaft 141 moves in the up-down direction, the engaging piece of each rotational disk 161 slides in the groove in the lifting shaft 141, so the rotational disk 161 does not move in the up-down direction. When the lifting shaft 141 rotates around the virtual central line 135, the engaging piece of the rotational disk 161 is pressed against the groove in the lifting shaft 141, the rotational disk 161 rotates together with the lifting shaft 141. The amount of the rotation of the rotational disk 161 is detected by the manipulation amount sensor 162. That is, the rotational manipulation of the manipulation knob 120 is detected by the manipulation amount sensor 162 through the lifting shaft 141 and rotational disks 161. A means of detecting the rotational manipulation of the manipulation knob 120 is not limited to this.

### Control system

Fig. 6 is a block diagram illustrating the structure of a control system involved in controlling the up-down movement of the shift apparatus 100. The shift apparatus 100 has a motor driving circuit 170, a control unit 180, and a storage device 190, illustrated in Fig. 6, which are mounted on the circuit board 150 illustrated in Fig. 3.

The motor driving circuit 170 controls the motor 130 in response to a command from the control unit 180 to rotate the rotational shaft 132 (see Fig. 3) in a desired orientation at a desired speed. The motor driving circuit 170 also stops the rotational shaft 132 (see Fig. 3).

The control unit 180 is a central processing unit. The storage device 190 is, for example, a random-access memory (RAM). The storage device 190 may be another device that can store information.

The control unit 180 reads a program stored in the storage device 190 and executes the program to perform various types of control for the shift apparatus 100. The control unit 180 may be achieved by another constituted element. For example, the control unit 180 may be an application-specific integrated circuit (ASIC).

The control unit 180 is connected to the motor 130, lower position sensor 151a, upper position sensor 151b, rotation sensor 134 (HU), rotation sensor 134 (HV), and rotation sensor 134 (HW). The control unit 180 references a signal pattern output from the rotation sensors 134 and acquires the number of repetitions that occurs at intervals of a certain rotational angle as the amount of rotation. To recognize a direction in which the manipulation knob 120 proceeds, the control unit 180 adds the amount of rotation in one direction and subtracts the amount of rotation in a direction opposite to the one direction. When, for example, the manipulation knob 120 moves upwardly from a certain position and then returns to the original position by moving backwardly, the amount of rotation is returned to the previous value.

When the control unit 180 reads a program stored in the storage device 190 and executes the program, the control unit 180 functions as a motor control unit 181, a storage control unit 182, and an abnormality detecting unit 183.

The motor control unit 181 rotates or stops the rotational shaft 132 so that the position of the manipulation knob 120 comes close to a target position, according to the amount of the rotation of the rotational shaft 132, the amount being detected by the rotation sensors 134, and to the position of the manipulation knob 120, the position being detected by the position sensor 151. The target position may be one of stop positions, including the projecting position in Fig. 1 and the storage position in Fig. 2, or may be another position. When, for example, the manipulation knob 120 moves from the detection position 202 toward the target position, the motor control unit 181 stops the manipulation knob 120 at the target position according to a certain amount of rotation from the detection position 202 to the target position, the certain amount having been stored in the storage device 190.

At different times, the storage control unit 182 causes the storage device 190 to store the amount of the rotation of the manipulation knob 120 from a predetermined reference position.

When, for example, the manipulation knob 120 has moved from the detection position 202 to the reference position, which is the target position, the storage control unit 182 causes the storage device 190 to store a rotation amount (first amount of rotation) equivalent to the movement of the manipulation knob 120 between the detection position 202 and the reference position.

Alternatively, the storage control unit 182 may cause the storage device 190 to store a rotation amount (second amount of rotation) obtained when the position of the manipulation knob 120, the position being detected by the position sensor 151, is the reference position, which is the boundary (detection position 202) of the detection range 201.

The reference position may be within the detection range 201, may be the boundary (detection position 202) of the detection range 201, or may be another position. The reference position is set by an abnormality detection method executed by the abnormality detecting unit 183 as described below.

The abnormality detecting unit 183 detects that at least one of the rotation sensors 134 and the position sensor 151 is abnormal, according to the position of the manipulation knob 120, the position being indicated by the amount of the rotation of the rotational shaft 132, the amount being detected by the rotation sensors 134, and to the position of the manipulation knob 120, the position being indicated by the position sensor 151.

The abnormality detecting unit 183 makes a first decision as to whether the manipulation knob 120 has reached the detection position 202 from the reference position, according to the rotation amount detected by the rotation sensors 134. The abnormality detecting unit 183 also makes a second decision as to whether the manipulation knob 120 has reached the detection position 202 from the reference position, according to the position detected by the position sensor 151. The abnormality detecting unit 183 then detects an abnormality according to a result in the first decision and a result in the second decision.

There are some different abnormality detection methods based on results in the first decision and second decision.

In the abnormality detection method, the reference position is distant from the detection position 202. In this case, in the first decision, the abnormality detecting unit 183 decides whether the manipulation knob 120 has moved from the reference position distant from the detection position 202 and has reached the detection position 202, according to the rotation amount detected by the rotation sensors 134. For example, in the first decision, the abnormality detecting unit 183 decides that the manipulation knob 120 has moved from the reference position and has reached the detection position 202, according to the rotation amount detected by the rotation sensors 134 (first amount of rotation) and to the rotation amount stored in the storage device 190.

In another exemplary abnormality detection method not covered by the claims, the reference position matches the detection position 202. In this case, in the first decision, the abnormality detecting unit 183 decides whether the manipulation knob 120 has reached the boundary (detection position 202) of the detection range 201, the boundary being the reference position, from the inside of the detection range 201, according to the rotation amount detected by the rotation sensors 134. In the second decision, the abnormality detecting unit 183 decides whether the manipulation knob 120 has reached the boundary (detection position 202) of the detection range 201 from the inside of the detection range 201, according to the position detected by the position sensor 151. For example, in the first decision, the abnormality detecting unit 183 decides whether the manipulation knob 120 that had moved from the outside of the detection range 201 to the inside of the detection range 201 has reached the boundary of the detection range 201, according to the rotation amount detected by the rotation sensors 134. Specifically, for example, in the first decision, the abnormality detecting unit 183 decides that the manipulation knob 120 has reached the boundary (detection position 202) of the detection range 201, according to the rotation amount detected by the rotation sensors 134 and to the rotation amount stored in the storage device 190 (second amount of rotation).

### First abnormality detection method

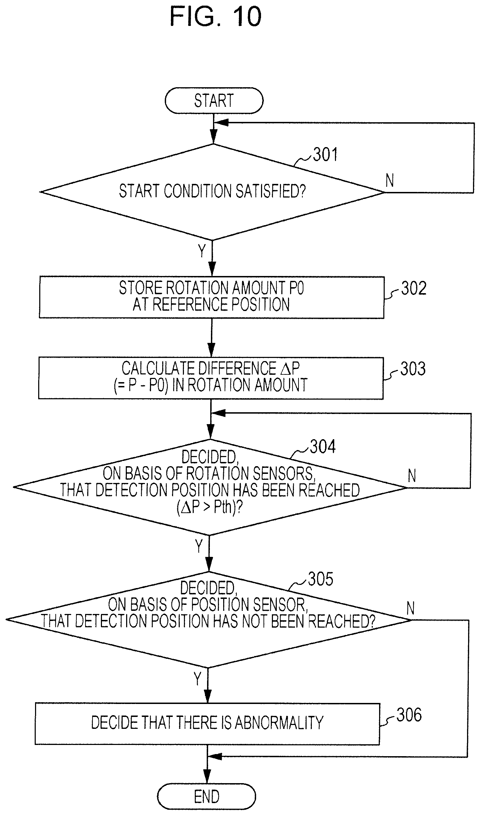

Next, a first abnormality detection method will be described with reference to the flowchart in Fig. 10. In the first abnormality detection method, the abnormality detecting unit 183 detects an abnormality in a process in which the motor control unit 181 moves the manipulation knob 120 stopping at the stop position 203 within the detection range 201 as illustrated in Fig. 7 to the outside of the detection range 201 as illustrated in Fig. 9. The first abnormality detection method may be applied to either the lower position sensor 151a or the upper position sensor 151b.

The stop position 203 distant from the detection position 202 is the reference position. The amount Pth of rotation is stored in the storage device 190 in advance; the amount Pth is obtained by adding a threshold to the rotation amount equivalent to a movement from the stop position 203 to the detection position 202. In this example, the amount of rotation is increased in a direction from the stop position 203 toward the detection position 202.

In step 301, the abnormality detecting unit 183 decides whether a start condition has been satisfied. If the motor control unit 181 has begun to move the manipulation knob 120 stopping at the stop position 203 toward the outside of the detection range 201, the abnormality detecting unit 183 decides that the start condition has been satisfied. If the start condition has been satisfied, the abnormality detecting unit 183 proceeds to step 302. If the start condition has not been satisfied, the abnormality detecting unit 183 repeatedly makes a decision in step 301.

In step 302, the abnormality detecting unit 183 causes the storage device 190 to store the amount of rotation at the time at which the start condition has been satisfied, that is, the amount P0 of rotation at the reference position.

Next, in step 303, the abnormality detecting unit 183 calculates a difference ΔP between the amount P0 of rotation at the reference position (that is, the stop position 203) and the current amount P of rotation (ΔP = P - P0).

Next, the abnormality detecting unit 183 makes the first decision in step 304. In the first decision, the abnormality detecting unit 183 decides whether the manipulation knob 120 has reached the detection position 202 from the reference position (that is, the stop position 203), according to the rotation amount detected by the rotation sensors 134 and to the amounts P0 and Pth of rotation, which are stored in the storage device 190. If ΔP is larger than Pth (or ΔP is larger than or equal to Pth), the abnormality detecting unit 183 decides that the manipulation knob 120 has reached the detection position 202 from the reference position and proceeds to step 305. If not, the abnormality detecting unit 183 decides that the manipulation knob 120 has not reached the detection position 202 from the reference position and returns to step 303.

In step 305, the abnormality detecting unit 183 makes the second decision. In the second decision, the abnormality detecting unit 183 decides whether the manipulation knob 120 has reached the detection position 202 from the reference position (that is, the stop position 203), according to the position detected by the position sensor 151. If the position sensor 151 is switched from the turned-on state to the turned-off state, the abnormality detecting unit 183 decides that the manipulation knob 120 has reached the detection position 202 from the reference position and terminates the processing. If the position sensor 151 remains turned on, the abnormality detecting unit 183 decides that the manipulation knob 120 has not reached the detection position 202 from the reference position and proceeds to step 306.

In step 306, the abnormality detecting unit 183 decides that the position sensor 151 is abnormal. If it is decided, according to the rotation amount detected by the rotation sensors 134, that the manipulation knob 120 has reached the detection position 202 from the reference position (that is, the stop position 203), but it is not decided, according to the position detected by the position sensor 151, that the manipulation knob 120 has reached the detection position 202 from the reference position, either the position sensor 151 or at least one of the rotation sensors 134 is highly likely to be abnormal. If it is decided that there is an abnormality, the control unit 180 stops the operation of the shift apparatus 100, generates a warning, or performs other processing to deal with the abnormality.

### Second abnormality detection method

Next, a second abnormality detection method not covered by the claims will be described with reference to the flowchart in Fig. 10. In the second abnormality detection method, the abnormality detecting unit 183 detects an abnormality in a process in which the motor control unit 181 moves the manipulation knob 120 present outside the detection range 201 as illustrated in Fig. 9 to the inside of the detection range 201 as illustrated in Fig. 7, after which the motor control unit 181 further moves the manipulation knob 120 to the outside of the detection range 201. The second abnormality detection method may be applied to either the lower position sensor 151a or the upper position sensor 151b.

The detection position 202, which is the boundary of the detection range 201, is the reference position. In this example, the amount of rotation is decreased in a direction from the outside of the detection range 201 toward the inside of the detection range 201, and is increased in a direction from the inside of the detection range 201 toward the outside of the detection range 201.

In step 301, the abnormality detecting unit 183 decides whether a start condition has been satisfied. Specifically, the abnormality detecting unit 183 decides whether the manipulation knob 120 has reached the boundary of the detection range 201 (that is, the detection position 202) from the outside of the detection range 201, according to the position detected by the position sensor 151. When the position sensor 151 is switched from the turned-off state to the turned-on state, the abnormality detecting unit 183 decides that the manipulation knob 120 has reached the boundary of the detection range 201 from the outside of the detection range 201 and the start condition has been satisfied. If the start condition has been satisfied, the abnormality detecting unit 183 proceeds to step 302. If the start condition has not been satisfied, the abnormality detecting unit 183 repeatedly makes a decision in step 301.

In step 302, the abnormality detecting unit 183 causes the storage device 190 to store the amount of rotation at the time at which the start condition has been satisfied, that is, the amount P0 of rotation at the reference position.

Next, in step 303, the abnormality detecting unit 183 calculates a difference ΔP between the amount P0 of rotation at the reference position (that is, the detection position 202) and the current amount P of rotation (ΔP = P - P0).

Next, the abnormality detecting unit 183 makes the first decision in step 304. In the first decision, the abnormality detecting unit 183 decides whether the manipulation knob 120 has reached the boundary of the detection range 201 (that is, the detection position 202), the boundary being the reference position, from the inside of the detection range 201, according to the rotation amount detected by the rotation sensors 134. The abnormality detecting unit 183 decides that the manipulation knob 120 has reached the boundary of the detection range 201, according to the rotation amount detected by the rotation sensors 134 and to the amounts P0 and Pth of rotation, which are stored in the storage device 190. Since, in this example, the detection position 202 is the reference position, the amount Pth of rotation, according to which it is decided whether the manipulation knob 120 has reached the boundary of the detection range 201 from the inside of the detection range 201, is set so as to be larger than P0 by a threshold.

If ΔP is larger than Pth (or ΔP is larger than or equal to Pth), the abnormality detecting unit 183 decides that the manipulation knob 120 has reached the boundary of the detection range 201 from the inside of the detection range 201 and proceeds to step 305. If not, the abnormality detecting unit 183 decides that the manipulation knob 120 has not reached the boundary of the detection range 201 from the inside of the detection range 201 and returns to step 303.

In step 305, the abnormality detecting unit 183 makes the second decision. In the second decision, the abnormality detecting unit 183 decides whether the manipulation knob 120 has reached the boundary of the detection range 201 (that is, the detection position 202) from the inside of the detection range 201, according to the position detected by the position sensor 151. If the position sensor 151 is switched from the turned-on state to the turned-off state, the abnormality detecting unit 183 decides that the manipulation knob 120 has reached the boundary of the detection range 201 from the inside of the detection range 201 and terminates the processing. If the position sensor 151 remains turned on, the abnormality detecting unit 183 decides that the manipulation knob 120 has not reached the boundary of the detection range 201 from the inside of the detection range 201 and proceeds to step 306.

In step 306, the abnormality detecting unit 183 decides that the position sensor 151 is abnormal. If it is decided, according to the rotation amount detected by the rotation sensors 134, that the manipulation knob 120 has reached the boundary of the detection range 201 (that is, the detection position 202) from the inside of the detection range 201, but it is not decided, according to the position detected by the position sensor 151, that the manipulation knob 120 has reached the boundary of the detection range 201 from the inside of the detection range 201, either the position sensor 151 or at least one of the rotation sensors 134 is highly likely to be abnormal. If it is decided that there is an abnormality, the control unit 180 stops the operation of the shift apparatus 100, generates a warning, or performs other processing to deal with the abnormality.

### Third abnormality detection method

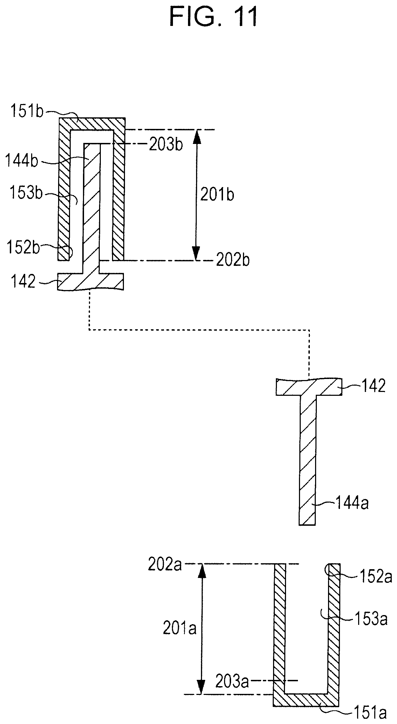

Next, a third abnormality detection method will be described with reference to the flowchart in Fig. 10. Fig. 11 illustrates a positional relationship among the lower position sensor 151a, upper position sensor 151b, lower light shielding piece 144a, and upper light shielding piece 144b. For the purpose of making a distinction, the reference numerals of the end 145, opening 152, internal space 153, detection range 201, detection position 202, and stop position 203 corresponding to the lower position sensor 151a are suffixed with "a", and the reference numerals of these elements corresponding to the upper position sensor 151b are suffixed with "b". In the third abnormality detection method, the positional relationship between the lower position sensor 151a and the upper position sensor 151b may be reversed.

In the third abnormality detection method, the abnormality detecting unit 183 detects an abnormality in a process in which the motor control unit 181 moves the manipulation knob 120 located within the detection range 201b of the upper position sensor 151b as illustrated in Fig. 11 to the inside of the detection range 201a of the lower position sensor 151a.

The detection position 202b of the upper position sensor 151b, the detection position 202b being distant from the detection position 202a of the lower position sensor 151a, is the reference position. The amount Pth of rotation is stored in the storage device 190 in advance; the amount Pth is obtained by adding a threshold to the rotation amount equivalent to a movement from the detection position 202b of the upper position sensor 151b to the detection position 202a of the lower position sensor 151a. In this example, the amount of rotation is increased in a direction from the detection position 202b of the upper position sensor 151b to the detection position 202a of the lower position sensor 151a.

In step 301, the abnormality detecting unit 183 decides whether a start condition has been satisfied. If the upper position sensor 151b is switched from the turned-on state to the turned-off state, the abnormality detecting unit 183 decides that the start condition has been satisfied. This means that the manipulation knob 120 has moved to below the detection range 201b of the upper position sensor 151b. If the start condition has been satisfied, the abnormality detecting unit 183 proceeds to step 302. If the start condition has not been satisfied, the abnormality detecting unit 183 repeatedly makes a decision in step 301.

In step 302, the abnormality detecting unit 183 causes the storage device 190 to store the amount of rotation at the time at which the start condition has been satisfied, that is, the amount P0 of rotation at the reference position (that is, the detection range 201b of the upper position sensor 151b).

Next, in step 303, the abnormality detecting unit 183 calculates a difference ΔP between the amount P0 of rotation at the reference position (that is, the detection range 201b of the upper position sensor 151b) and the current amount P of rotation (ΔP = P - P0).

Next, the abnormality detecting unit 183 makes the first decision in step 304. In the first decision, the abnormality detecting unit 183 decides whether the manipulation knob 120 has reached the detection position 202a of the lower position sensor 151a from the reference position (that is, the detection position 202b of the upper position sensor 151b), according to the rotation amount detected by the rotation sensors 134. The abnormality detecting unit 183 decides that the manipulation knob 120 has moved from the reference position and has reached the detection position 202a of the lower position sensor 151a, according to the rotation amount detected by the rotation sensors 134 and to the amounts P0 and Pth of rotation, which are stored in the storage device 190.

If ΔP is larger than Pth (or ΔP is larger than or equal to Pth), the abnormality detecting unit 183 decides that the manipulation knob 120 has reached the detection position 202a of the lower position sensor 151a from the detection position 202b of the upper position sensor 151b and proceeds to step 305. If not, the abnormality detecting unit 183 returns to step 303.

In step 305, the abnormality detecting unit 183 makes the second decision. In the second decision, the abnormality detecting unit 183 decides whether the manipulation knob 120 has reached the detection position 202a of the lower position sensor 151a from the reference position (that is, the detection position 202b of the upper position sensor 151b), according to the position detected by the lower position sensor 151a. If the lower position sensor 151a is switched from the turned-off state to the turned-on state, the abnormality detecting unit 183 decides that the manipulation knob 120 has reached the detection position 202a of the lower position sensor 151a from the reference position and terminates the processing. If the lower position sensor 151a remains turned off, the abnormality detecting unit 183 decides that the manipulation knob 120 has not reached the detection position 202a from the reference position and proceeds to step 306.

In step 306, the abnormality detecting unit 183 decides that the position sensor 151 is abnormal. If it is decided, according to the rotation amount detected by the rotation sensors 134, that the manipulation knob 120 has reached the detection position 202a of the lower position sensor 151a from the reference position (that is, the detection position 202b of the upper position sensor 151b), but it is not decided, according to the position detected by the lower position sensor 151a, that the manipulation knob 120 has reached the detection position 202a of the lower position sensor 151a from the reference position, either the position sensor 151 or at least one of the rotation sensors 134 is highly likely to be abnormal. If it is decided that there is an abnormality, the control unit 180 stops the operation of the shift apparatus 100, generates a warning, or performs other processing to deal with the abnormality.

According to this embodiment, a difference between a detection result obtained from the position sensor 151 and a detection result obtained from the rotation sensors 134 is used, so an abnormality can be accurately detected with a simple structure. The position sensor 151 detects the position of the manipulation knob 120, and the rotation sensors 134 detect the amount of rotation of the rotational shaft 132. Since, in this embodiment, sensors intended for direct detection of different targets are used to detect the position of the same manipulation knob 120 as described above, the possibility that the same abnormality occurs due to the same event is lower than when two sensors of the same type are used to detect the same target, enabling an abnormality to be more accurately detected. In this embodiment, the structure can be simplified when compared with a case in which a plurality of position sensors 151 are used to redundantly detect their target and a plurality of rotation sensors 134 are also used to redundantly detect their target.

The present invention is not limited to the embodiment described above. That is, a person having ordinary skill in the art may make various modifications, combinations, subcombinations, and replacements for the constituent elements in the above embodiment, without departing from the invention as defined in the appended claims.

The present invention can be applied to vehicles, aircraft, ships, and other various conveyances.

## Claims

1. A shift apparatus (100) comprising:
a manipulation knob (120) used to switch a transmission;
a motor (130) that includes a rotational shaft (132);
a moving mechanism that moves the manipulation knob (120) along a predetermined path in an up-down direction by rotation of the rotational shaft (132),
a rotation sensor (134) that detects a rotation amount of the rotational shaft (132);
a position sensor (151) that detects a position of the manipulation knob (120), wherein the position sensor (151) detects that the manipulation knob is present at a detection position; and
a control unit (180); wherein the control unit (180) includes:
a motor control unit (181) that rotates or stops the rotational shaft (132) so that the position of the manipulation knob (120) comes close to a target position, according to the rotation amount detected by the rotation sensor (134) and to the position detected by the position sensor (151), and
an abnormality detecting unit (183) that detects that at least one of the position sensor (151) and the rotation sensor (134) is abnormal, according to the position of the manipulation knob (120), the position being indicated by the rotation amount detected by the rotation sensor (134), and to the position detected by the position sensor (151);
wherein the abnormality detecting unit (183) makes a first decision as to whether the manipulation knob (120) has reached the detection position from a reference position, according to the rotation amount detected by the rotation sensor (134), makes a second decision as to whether the manipulation knob (120) has reached the detection position from the reference position, according to the position detected by the position sensor (151), and detects an abnormality according to a result in the first decision and a result in the second decision;
**characterized in that**
the moving mechanism comprises:
a lifting shaft (141) integrally linked with the manipulation knob (120),
a lifting platform (142) rotatably holding the lifting shaft (141); and
a driven gear piece (143) secured to the lifting platform (142) and placed around the rotational shaft (132) which moves in an up-down direction by rotation of the rotational shaft;
the position sensor (151) detects that the manipulation knob (120) is present within a detection range, a boundary of which is the detection position;
in the first decision, the abnormality detecting unit (183) decides whether the manipulation knob (120) has moved from the reference position distant from the detection position and has reached the detection position, according to the rotation amount detected by the rotation sensor (134); and
the reference position is within the detection range.

2. The shift apparatus according to Claim 1, further comprising a storage device (190) that stores a rotation amount equivalent to a movement of the manipulation knob (120) between the detection position and the reference position, wherein
in the first decision, the abnormality detecting unit (183) decides that the manipulation knob (120) has moved from the reference position and has reached the detection position, according to the rotation amount detected by the rotation sensor (134) and to the rotation amount stored in the storage device (190).

3. The shift apparatus according to Claim 2, wherein the control unit (180) further includes a storage control unit (182) that, when the manipulation knob (120) has moved from the detection position to the reference position, causes the storage device (190) to store the rotation amount equivalent to the movement of the manipulation knob (120) between the detection position and the reference position.

4. The shift apparatus according to Claim 2 or 3, wherein when the manipulation knob (120) moves from the detection position toward the reference position, the motor control unit (181) stops the manipulation knob (120) at the reference position according to the rotation amount stored in the storage device (190).

5. The shift apparatus according to Claim 1, wherein, in the first decision, the abnormality detecting unit (183) decides whether the manipulation knob (120) that had moved from an outside of the detection range to the inside of the detection range has reached the boundary of the detection range, according to the rotation amount detected by the rotation sensor (134).

6. The shift apparatus according to Claim 1, further comprising a storage device (190), wherein:
the storage unit further includes a storage control unit (182) that causes the storage device (190) to store a rotation amount obtained when the position of the manipulation knob (120), the position being detected by the position sensor (151), is the boundary of the detection range; and
in the first decision, the abnormality detecting unit (183) decides that the manipulation knob (120) has reached the boundary of the detection range, according to the rotation amount detected by the rotation sensor (134) and to the rotation amount stored in the storage device (190).

7. The shift apparatus according to any one of Claims 1 to 6, wherein the abnormality detecting unit (183) obtains the position of the manipulation knob (120) according to the rotation amount detected by the rotation sensor (134) by adding the rotation amount while the rotational shaft (132) is rotating in a first direction and subtracting the rotation amount while the rotational shaft (132) is rotating in a second direction opposite to the first direction.

8. The shift apparatus according to any one of Claims 1 to 7, wherein the position sensor (151) is a photosensor.

9. The shift apparatus according to any one of Claims 1 to 8, wherein the rotation sensor (134) is a magnetic sensor.

10. The shift apparatus according to any one of Claims 1 to 9, wherein the predetermined path is a straight line.

11. A method of detecting an abnormality in a shift apparatus (100) according to any one of Claims 1 to 10.

## Patentansprüche

1. Schaltvorrichtung (100), aufweisend:
einen Betätigungsknopf (120), der zum Schalten eines Getriebes verwendet wird;
einen Motor (130), der eine Rotationswelle (132) aufweist;
einen Bewegungsmechanismus, der den Betätigungsknopf (120) durch Rotation der Rotationswelle (132) entlang einer vorbestimmten Bahn in Richtung nach oben und unten bewegt;
einen Rotationssensor (134), der einen Rotationsbetrag der Rotationswelle (132) erfasst;
einen Positionssensor (151), der eine Position des Betätigungsknopfes (120) erfasst, wobei der Positionssensor (151) erfasst, dass sich der Betätigungsknopf in einer Erfassungsposition befindet; und
eine Steuereinheit (180); wobei die Steuereinheit (180) aufweist:
eine Motorsteuereinheit (181), die die Rotationswelle (132) in Abhängigkeit von dem durch den Rotationssensor (134) erfassten Rotationsbetrag und der durch den Positionssensor (151) erfassten Position dreht oder stoppt, so dass die Position des Betätigungsknopfes (120) nahe an eine Zielposition kommt, und
eine Anomalieerfassungseinheit (183), die die Tatsache, dass mindestens einer von dem Positionssensor (151) und dem Rotationssensor (134) anormal ist, in Abhängigkeit von der Position des Betätigungsknopfes (120), die durch den durch den Rotationssensor (134) erfassten Rotationsbetrag angezeigt wird, sowie der durch den Positionssensor (151) erfassten Position erfasst;
wobei die Anomalieerfassungseinheit (183) eine erste Entscheidung dahingehend, ob der Betätigungsknopf (120) die Erfassungsposition ausgehend von einer Referenzposition erreicht hat, in Abhängigkeit von dem durch den Rotationssensor (134) erfassten Rotationsbetrag trifft, eine zweite Entscheidung dahingehend, ob der Betätigungsknopf (120) die Erfassungsposition ausgehend von der Referenzposition erreicht hat, in Abhängigkeit von der durch den Positionssensor (151) erfassten Position trifft und eine Anomalie in Abhängigkeit von einem Resultat bei der ersten Entscheidung und einem Resultat bei der zweiten Entscheidung erfasst,
**dadurch gekennzeichnet,**
**dass** der Bewegungsmechanismus aufweist:
eine Hebestange (141), die mit dem Betätigungsknopf (120) in integraler Weise gekoppelt ist;
eine Hebeplattform (141), die die Hebestange (141) drehbar hält; und
ein angetriebenes Getriebestück (143), das an der Hebeplattform (142) befestigt ist und um die Rotationswelle (132) herum angeordnet ist und das sich durch Rotation der Rotationswelle in Richtung nach oben und nach unten bewegt;
**dass** der Positionssensor (151) erfasst, dass sich der Betätigungsknopf (120) innerhalb eines Erfassungsbereichs befindet, von dem eine Grenze die Erfassungsposition ist;
**dass** die Anomalieerfassungseinheit (183) bei der ersten Entscheidung in Abhängigkeit von dem durch den Rotationssensor (134) erfassten Rotationsbetrag entscheidet, ob sich der Betätigungsknopf (120) von der von der Erfassungsposition entfernt gelegenen Referenzposition bewegt hat und die Erfassungsposition erreicht hat; und
**dass** sich die Referenzposition innerhalb des Erfassungsbereichs befindet.

2. Schaltvorrichtung nach Anspruch 1,
die ferner eine Speichervorrichtung (190) aufweist, die einen Rotationsbetrag speichert, der einer Bewegung des Betätigungsknopfes (120) zwischen der Erfassungsposition und der Referenzposition entspricht, wobei bei der ersten Entscheidung die Anomalieerfassungseinheit (183) die Entscheidung, dass sich der Betätigungsknopf (120) ausgehend von der Referenzposition bewegt hat und die Erfassungsposition erreicht hat, in Abhängigkeit von dem durch den Rotationssensor (134) erfassten Rotationsbetrag und dem in der Speichervorrichtung (190) gespeicherten Rotationsbetrag trifft.

3. Schaltvorrichtung nach Anspruch 2,
wobei die Steuereinheit (180) ferner eine Speichersteuereinheit (182) aufweist, die, wenn sich der Betätigungsknopf (120) von der Erfassungsposition zu der Referenzposition bewegt hat, die Speichervorrichtung (190) veranlasst, den Rotationsbetrag zu speichern, der der Bewegung des Betätigungsknopfes (120) zwischen der Erfassungsposition und der Referenzposition entspricht.

4. Schaltvorrichtung nach Anspruch 2 oder 3,
wobei dann, wenn sich der Betätigungsknopf (120) von der Erfassungsposition in Richtung zu der Referenzposition bewegt, die Motorsteuereinheit (181) den Betätigungsknopf (120) in Abhängigkeit von dem in der Speichervorrichtung (190) gespeicherten Rotationsbetrag an der Referenzposition stoppt.

5. Schaltvorrichtung nach Anspruch 1,
wobei bei der ersten Entscheidung die Anomalieerfassungseinheit (183) die Entscheidung, ob der Betätigungsknopf (120), der sich von außerhalb des Erfassungsbereichs in das Innere des Erfassungsbereichs bewegt hat, die Grenze des Erfassungsbereichs erreicht hat, in Abhängigkeit von dem durch den Rotationssensor (134) erfassten Rotationsbetrag trifft.

6. Schaltvorrichtung nach Anspruch 1,
die ferner eine Speichervorrichtung (190) aufweist, wobei:
die Speichereinheit ferner eine Speichersteuereinheit (182) aufweist, die die Speichervorrichtung (190) zum Speichern eines Rotationsbetrags veranlasst, der ermittelt wird, wenn es sich bei der durch den Positionssensor (151) erfassen Position des Betätigungsknopfes (120) um die Grenze des Erfassungsbereichs handelt; und
bei der ersten Entscheidung die Anomalieerfassungseinheit (183) die Entscheidung, dass der Betätigungsknopf (120) die Grenze des Erfassungsbereichs erreicht hat, in Abhängigkeit von dem durch den Rotationssensor (134) erfassten Rotationsbetrag und dem in der Speichervorrichtung (190) gespeicherten Rotationsbetrag trifft.

7. Schaltvorrichtung nach einem der Ansprüche 1 bis 6,
wobei die Anomalieerfassungseinheit (183) die Position des Betätigungsknopfes (120) in Abhängigkeit von dem durch den Rotationssensor (134) erfassten Rotationsbetrag ermittelt unter Addieren des Rotationsbetrags, während sich die Rotationswelle (132) in einer ersten Richtung dreht, sowie unter Subtrahieren des Rotationsbetrags, während sich die Rotationswelle (132) in einer zweiten Richtung entgegengesetzt zu der ersten Richtung dreht.

8. Schaltvorrichtung nach einem der Ansprüche 1 bis 7,
wobei der Positionssensor (151) ein Fotosensor ist.

9. Schaltvorrichtung nach einem der Ansprüche 1 bis 8,
wobei der Rotationssensor (134) ein Magnetsensor ist.

10. Schaltvorrichtung nach einem der Ansprüche 1 bis 9,
wobei die vorbestimmte Bahn eine gerade Linie ist.

11. Verfahren zum Erfassen einer Anomalie in einer Schaltvorrichtung (100) nach einem der Ansprüche 1 bis 10.

## Revendications

1. Appareil de commande de vitesses (100) comprenant :
un pommeau de manipulation (120) utilisé pour changer de vitesse ;
un moteur (130) qui inclut un arbre rotatif (132) ;
un mécanisme de déplacement qui déplace le pommeau de manipulation (120) selon un chemin prédéterminé dans un sens de haut en bas par rotation de l'arbre rotatif (132),
un capteur de rotation (134) qui détecte une quantité de rotation de l'arbre rotatif (132) ;
un capteur de position (151) qui détecte une position du pommeau de manipulation (120), le capteur de position (151) détectant que le pommeau de manipulation se trouve dans une position de détection ; et
une unité de commande (180) ; l'unité de commande (180) comprenant :
une unité de commande de moteur (181) qui fait tourner ou s'arrêter l'arbre rotatif (132) de manière à ce que la position du pommeau de manipulation (120) s'approche d'une position cible, d'après la quantité de rotation détectée par le capteur de rotation (134) et la position détectée par le capteur de position (151), et
une unité de détection d'anormalité (183) qui détecte qu'au moins un capteur entre le capteur de position (151) et le capteur de rotation (134) est anormal, d'après la position du pommeau de manipulation (120), la position étant indiquée par la quantité de rotation détectée par le capteur de rotation (134) et la position détectée par le capteur de position (151) ;
dans lequel l'unité de détection d'anormalité (183) prend une première décision quant à savoir si le pommeau de manipulation (120) a atteint la position de détection depuis une position de référence, d'après la quantité de rotation détectée par le capteur de rotation (134), prend une deuxième décision quant à savoir si le pommeau de manipulation (120) a atteint la position de détection depuis une position de référence, d'après la position détectée par le capteur de position (151), et détecte une anormalité d'après le résultat de la première décision et le résultat de la deuxième décision ;
**caractérisé en ce que**
le mécanisme de déplacement comprend :
un arbre de levage (141) intégralement relié au pommeau de manipulation (120),
une plateforme de levage (142) maintenant de manière rotative l'arbre de levage (141) ; et
une pièce d'engrenage entraînée (143), fixée à la plateforme de levage (142) et placée autour de l'arbre rotatif (132), qui se déplace de haut en bas par rotation de l'arbre rotatif ;
le capteur de position (151) détecte que le pommeau de manipulation (120) est présent dans une plage de détection, dont une limite est la position de détection ;
à la première décision, l'unité de détection d'anormalité (183) décide si le pommeau de manipulation (120) s'est déplacé depuis la position de référence, à distance de la position de détection, et a atteint la position de détection, d'après la quantité de rotation détectée par le capteur de rotation (134) ; et
la position de référence se situe dans la plage de détection.

2. L'appareil de commande de vitesses selon la revendication 1, comprenant en outre un dispositif de stockage (190) qui stocke une quantité de rotation équivalente à un déplacement du pommeau de manipulation (120) entre la position de détection et la position de référence, dans lequel, à la première décision, l'unité de détection d'anormalité (183) décide que le pommeau de manipulation (120) s'est déplacé depuis la position de référence et a atteint la position de détection, d'après la quantité de rotation détectée par le capteur de rotation (134) et la quantité de rotation stockée dans le dispositif de stockage (190).

3. L'appareil de commande de vitesses selon la revendication 2, dans lequel l'unité de commande (180) inclut en outre une unité de commande de stockage (182) qui, lorsque le pommeau de manipulation (120) s'est déplacé de la position de détection vers la position de référence, commande au dispositif de stockage (190) de stocker la quantité de rotation équivalente au déplacement du pommeau de manipulation (120) entre la position de détection et la position de référence.

4. L'appareil de commande de vitesses selon la revendication 2 ou 3, dans lequel, lorsque le pommeau de manipulation (120) se déplace de la position de détection vers la position de référence, l'unité de commande de moteur (181) stoppe le pommeau de manipulation (120) à la position de référence d'après la quantité de rotation stockée dans le dispositif de stockage (190).

5. L'appareil de commande de vitesses selon la revendication 1, dans lequel, à la première décision, l'unité de détection d'anormalité (183) décide si le pommeau de manipulation (120), qui s'est déplacé depuis une position située en dehors de la plage de détection vers l'intérieur de la plage de détection, a atteint la limite de la plage de détection, d'après la quantité de rotation détectée par le capteur de rotation (134).

6. L'appareil de commande de vitesses selon la revendication 1, comprenant en outre un dispositif de stockage (190), dans lequel :
l'unité de stockage inclut en outre une unité de commande de stockage (182) qui commande au dispositif de stockage (190) de stocker une quantité de rotation obtenue lorsque la position du pommeau de manipulation (120), position étant détectée par le capteur de position (151), est la limite de la plage de détection ; et
à la première décision, l'unité de détection d'anormalité (183) décide que le pommeau de manipulation (120) a atteint la limite de la plage de détection, d'après la quantité de rotation détectée par le capteur de rotation (134) et la quantité de rotation stockée dans le dispositif de stockage (190).

7. L'appareil de commande de vitesses selon l'une quelconque des revendications 1 à 6, dans lequel l'unité de détection d'anormalité (183) obtient la position du pommeau de manipulation (120) d'après la quantité de rotation détectée par le capteur de rotation (134) en ajoutant la quantité de rotation quand l'arbre rotatif (132) tourne dans un premier sens et en soustrayant la quantité de rotation quand l'arbre rotatif (132) tourne dans un deuxième sens, opposé au premier sens.

8. L'appareil de commande de vitesses selon l'une quelconque des revendications 1 à 7, dans lequel le capteur de position (151) est un photocapteur.

9. L'appareil de commande de vitesses selon l'une quelconque des revendications 1 à 8, dans lequel le capteur de rotation (134) est un capteur magnétique.

10. L'appareil de commande de vitesses selon l'une quelconque des revendications 1 à 9, dans lequel le chemin prédéterminé est une ligne droite.

11. Procédé de détection d'anormalité dans un appareil de commande de vitesses (100) selon l'une quelconque des revendications 1 à 10.
